# EUROPEAN PATENT APPLICATION

(11) **EP 4 542 789 A1**
(43) Date of publication of application: **23.04.2025**
(21) Application number: 24834590.2
(22) Date of filing: 21.05.2024
(51) Int. Cl.: H01R 13/72

(54) **CABLE STORAGE DEVICE, DATA LINE DEVICE, AND ULTRATHIN TELESCOPIC DATA LINE DEVICE**

(30) Priority: 12.07.2023 CN 202310859731; 12.07.2023 CN 202321841950 U
(71) Applicant: Dongguan Ceesing Intelligent Device Manufacturing Co., Ltd, Dongguan, Guangdong 523000 (CN)
(72) Inventor: LIN, Zhanxing, Dongguan, Guangdong 523000 (CN); ZHANG, Shengwei, Dongguan, Guangdong 523000 (CN); LI, Guangbin, Dongguan, Guangdong 523000 (CN)
(74) Representative: Regimbeau
(86) International application number: PCT/CN2024/094468
(87) International publication number: WO 2025/011202

(57) **Abstract**

Embodiments of the application disclose a cable receiving device, a data cable device, and an ultrathin telescopic data cable device. The cable receiving device comprises a rotation member and a cable. The cable comprises a fixation section and winding sections, the fixation section is fixed to the rotation member, and the winding sections are wound on an outside of the fixation section. In this case, the cable would not be wound with other items, which saves time for separating the cable from the wound items, and may greatly improve user experience on the cable.

## Description

### CROSS-REFERENCE TO RELATED APPLICATION

This application claims priorities to Chinese patent application No. 202310859731.0 and Chinese patent application No. 202321841950.8, the applications of which are hereby incorporated by reference in their entireties.

### TECHNICAL FIELD

The application relates to the field of storage technologies, and in particular to a cable receiving device, a data cable device, and an ultrathin telescopic data cable device.

### BACKGROUND

In the related art, there is usually no structure for receiving the cable. The cable is directly placed on a desktop or in a bag, and often intertwined with other items on the desktop or in the bag. It is necessary to separate the cable from the wound items before use, which is time-consuming, and results in a poor user experience.

### SUMMARY

In view of this, embodiments of the application are desired to provide a cable receiving device, a data cable device, and an ultrathin telescopic data cable device.

In order to achieve the above purpose, technical solutions of the application are implemented as follows.

An embodiment of the application provides a cable receiving device, the cable receiving device comprises a rotation member and a cable. The cable comprises a fixation section and winding sections, the fixation section is fixed to the rotation member, and the winding sections are configured to be wound on an outside of the fixation section.

In some optional implementations, the rotation member may comprise a first seat and a first connection component, the first seat is provided with a receiving space, and the first connection component is arranged in the receiving space along an axial direction of the rotation member.

The cable receiving device further comprises a first strip-shaped member.

The first strip-shaped member is arranged in the receiving space along the axial direction of the rotation member, and a first gap is defined between the first strip-shaped member and the first connection component.

The cable comprises the fixation section, a first part of the fixation section is snapped in the first gap, and a second part of the fixation section is arranged around a periphery of the first strip-shaped member.

In some optional implementations, the cable receiving device may further comprise a second strip-shaped member.

The second strip-shaped member is arranged in the receiving space along the axial direction of the rotation member, and a second gap is defined between the second strip-shaped member and the first connection component.

The fixation section further comprises a third part located at an end of the first part opposite to the second part, and the third part is snapped in the second gap.

Parts of the fixation section located at two ends of the third part are arranged around a periphery of the first connection component.

In some optional implementations, the second strip-shaped member and the first strip-shaped member may be arranged at an interval in a circumferential direction of the first connection component.

In some optional implementations, the second strip-shaped member and the first strip-shaped member may be located at opposite sides of the first connection component.

In some optional implementations, a surface of the second strip-shaped member facing a side of the first connection component may be an arc surface.

In some optional implementations, the first strip-shaped member may be a columnar structure, and/or the second strip-shaped member may be a columnar structure.

In some optional implementations, a radial size of the first connection component in a first width direction is relatively large, and a radial size of the first connection component in a second width direction is relatively small.

The first strip-shaped member and the second strip-shaped member are located at opposite sides of the first connection component in the second width direction.

In some optional implementations, an outer surface of the first connection component in the first width direction may be a flat surface, and an outer surface of the first connection component in the second width direction is an arc surface.

In some optional implementations, the first seat is provided with a first plate and a second plate arranged at an interval in the axial direction of the rotation member, and the receiving space is defined between the first plate and the second plate.

The first connection component is connected to the first plate and the second plate respectively, and the first strip-shaped member is connected to the first plate and the second plate.

In some optional implementations, a surface of the first strip-shaped member surrounded by the fixation section may be an arc surface.

In some optional implementations, the winding sections may be located at two ends of the fixation section, and configured to be wound on the outside of the fixation section along a circumferential direction of the fixation section.

An embodiment of the application further provides a data cable device, the data cable device comprises a housing and the cable receiving device in the above embodiment of the application.

The housing is provided with an accommodation cavity and a second connection component located in the accommodation cavity.

The rotation member is arranged in the accommodation cavity, and the second connection component is rotatably connected to the first connection component.

In some optional implementations, the first connection component may be provided with a through hole arranged along an axial direction of the rotation member, and the second connection component is inserted into the through hole.

An embodiment of the application further provides an ultrathin telescopic data cable device, the ultrathin telescopic data cable device comprises a housing and the cable receiving device in the above embodiment of the application.

The housing is provided with an accommodation cavity.

The rotation member is rotatably arranged in the accommodation cavity.

The winding sections are configured to be wound in a circumferential direction of the rotation member, and wound parts of the winding sections are located in a space defined by the housing.

In some optional implementations, the ultrathin telescopic data cable device may further comprise a second elastic member.

The second elastic member is arranged on the rotation member, and at least a part of a projection of the second elastic member on a projection plane parallel to an axis of the rotation member being located within a projection area of the fixation section on the projection plane.

The second elastic member is connected to the housing, to provide a restoring force for rotation of the rotation member.

In some optional implementations, all the projection of the second elastic member may be located within the projection area of the fixation section.

In some optional implementations, in a thickness direction of the ultrathin telescopic data cable device, a first gap may be present between the cable and a first wall of the housing, and/or a second gap may be present between the cable and a second wall of the housing.

In some optional implementations, the housing may be provided a first wall and a second wall opposite to one another in a thickness direction of the ultrathin telescopic data cable device.

The wound parts of the winding sections are located in a space defined by the first wall and the second wall.

In some optional implementations, the housing may be provided with a first wall and a second wall opposite to one another in a thickness direction of the ultrathin telescopic data cable device.

The rotation member comprises a winding component.

A first end of the winding component is located at a side of first wall, the fixation section is fixed to the winding component, and the winding sections are configured to be wound in a circumferential direction of the winding component.

A projection of the winding sections on a projection plane perpendicular to an axis of the rotation member is located outside a projection area of the winding component on the projection plane perpendicular to an axis of the rotation member.

In some optional implementations, a second end of the winding component may be located a side of the second wall.

The rotation member further comprises a positioning component.

The positioning component is arranged at the second end of the winding component, and the positioning component is protruded from a periphery of the winding component along the circumferential direction of the winding component.

A part of the wound part of each winding section is abutted against the positioning component, and a part of the projection of the winding sections on the projection plane perpendicular to the axis of the rotation member is located outside a projection area of the positioning component.

In some optional implementations, a height of the positioning component protruded from the winding component may be less than a thickness of the winding section.

In some optional implementations, the rotation member may be provided with a second groove, and an opening of the second groove is located at a first end of the rotation member.

At least a part of the second elastic member is arranged in the second groove, a first end of the second elastic member is fixed to the housing, and a second end of the second elastic member is fixed to the rotation member.

In some optional implementations, a periphery of the rotation member is provided with at least one first opening in communication with the second groove, and the fixation section is fixed in the second groove through the first opening.

In some optional implementations, the rotation member may further comprise a partition wall arranged in the second groove, there are two first openings, and the two first openings are located at two ends of the partition wall.

The partition wall divides the second groove into a first space and a second space, and the fixation section is fixed in the first space through the two first openings.

At least a part of the second elastic member is arranged in the second space.

In some optional implementations, the periphery of the rotation member is provided with a second opening in communication with the second space, the first end of the second elastic member is fixed to the housing in the second space, and the second end of the second elastic member passes through the second opening and is fixed to a wall of the rotation member located at a periphery of the second groove by snap-fitting.

In some optional implementations, at a bottom wall of the second groove, the rotation member is provided with a connection through hole arranged along an axial direction.

The housing is also provided with a third connection component inserted into the connection through hole, and the first end of the second elastic member is fixed to the third connection component.

In some optional implementations, a second end of the rotation member may be provided with an inner chute and an outer chute which are annular and arranged at an interval and in respective annular shapes, and an inlet and an outlet communicated with the inner chute and the outer chute respectively. The winding component is also provided with a clamping groove at the outlet.

The ultrathin telescopic data cable device further comprises a positioning member.

The positioning member comprises a second seat rotatably arranged on the housing and a positioning protrusion protruded from an end surface of the second seat, the positioning protrusion is configured to be engaged in the clamping groove, to limit a rotation position of the rotation member relative to the housing.

In some optional implementations, the rotation member may be provided with a first guide protuberance at an inner sidewall of the inner chute, and the first guide projection is located at the outlet, to guide the positioning protrusion to slide into the clamping groove from the outlet.

The rotation member is provided with a second guide protuberance at an outer sidewall of the outer chute, and the second guide protuberance is located at the inlet, to guide the positioning protrusion to slide into the inner chute from the inlet.

In some optional implementations, the second seat may be an annular structure, and the housing further comprises a second protruded column inserted into an inner cavity of the second seat.

In some optional implementations, the housing may also be provided with a first hole and a second hole in communication with the accommodation cavity.

There are two said winding sections, and the two winding sections are located at two ends of the fixation section.

The cable further comprises a first interface member and a second interface member.

The first interface member is connected to one of the two winding sections, at least a part of the first interface member passes through the first hole and is located outside the housing.

The second interface member is connected to another one of the two winding sections, at least a part of the second interface member passes through the second hole and is located outside the housing.

In some optional implementations, at least a part of a projection of the winding section on a projection plane perpendicular to an axis of the rotation member is located outside a projection area of the rotation member on the projection plane perpendicular to the axis of the rotation member.

In some optional implementations, in a thickness direction of the ultrathin telescopic data cable device, there is a gap between the cable and a first wall of the housing and there is a gap between the cable and a second wall of the housing. A minimum thickness of the ultrathin telescopic data cable device is equal to a sum of width of the cable, a thickness of the first wall, a thickness of the second wall and the gaps.

The cable receiving device in the embodiment of the application comprises a rotation member and a cable. The cable comprises a fixation section and winding sections, the fixation section is fixed to the rotation member, and the winding sections are configured to be wound on the outside of the fixation section. In this case, the cable would not be wound with other items, which saves time for separating the cable from the wound items, and may greatly improve user experience on the cable.

### BRIEF DESCRIPTION OF THE DRAWINGS

FIG. 1 is a cross-sectional view of an optional data cable device provided in an embodiment of the application.
FIG. 2 is a schematic view of an optional rotation member provided in an embodiment of the application.
FIG. 3 is a cross-sectional view of an optional data cable device provided in an embodiment of the application.
FIG. 4 is a partial schematic view of an optional rotation member provided in an embodiment of the application.
FIG. 5 is a partial schematic view of an optional rotation member provided in an embodiment of the application.
FIG. 6 is a schematic view of an optional rotation member provided in an embodiment of the application.
FIG. 7 is a partial schematic view of an optional rotation member provided in an embodiment of the application.
FIG. 8 is a schematic view of an optional data cable device provided in an embodiment of the application.
FIG. 9 is a cross-sectional view of an optional ultrathin telescopic data cable device provided in an embodiment of the application.
FIG. 10 is a partial cross-sectional view of an optional ultrathin telescopic data cable device provided in an embodiment of the application.
FIG. 11 is a partial schematic view of an optional ultrathin telescopic data cable device provided in an embodiment of the application.
FIG. 12 is a partial schematic view of an optional ultrathin telescopic data cable device provided in an embodiment of the application.
FIG. 13 is a schematic view of an optional ultrathin telescopic data cable device provided in an embodiment of the application.
FIG. 14 is a schematic view of an optional positioning member provided in an embodiment of the application.
FIG. 15 is a partial cross-sectional view of an ultrathin telescopic data cable device provided in an embodiment of the application.
FIG. 16 is a partial cross-sectional view of an ultrathin telescopic data cable device provided in an embodiment of the application.
FIG. 17 is a partial schematic view of an optional ultrathin telescopic data cable device provided in an embodiment of the application.

Reference numerals: 100. cable receiving device; 110. rotation member; 111. first seat; 1111. first plate; 1112. second plate; 1113. receiving space; 1114. fixation wall; 112. first connection component; 1121. through hole; 120. first strip-shaped member; 130. cable; 131. fixation section; 1311. first part; 1312. second part; 1313. third part; 132. winding section; 133. interface member; 140. second strip-shaped member; 200. housing; 201. top shell; 202. bottom shell; 203. cover plate; 210. accommodation cavity; 220. second connection component; 230. opening; 310. first elastic member; 400. positioning assembly; 410. motion gear; 411. first groove; 420. connection member; 421. first protrusion; 422. second protrusion; 423. third protrusion; 430. limit gear; 431. limit groove; 440. return member; 204. first wall; 205. second wall; 206. third connection component; 161. first hole; 162. second hole; 180. first fixation hole; 190. second protruded column; 150. winding component; 160. positioning component; 170. second groove; 171. first space; 172. second space; 240. partition wall; 250. first opening; 260. second opening; 270. connection through hole; 281. inner chute; 282. outer chute; 283. inlet; 284. outlet; 285. clamping groove; 286. first guide protuberance; 287. second guide protuberance; 320. first interface member; 330. second interface member; 600. positioning member; 610. second seat; 620. positioning protrusion; 510. second elastic member.

### DETAILED DESCRIPTION

The technical solutions of the application will be further described in detail below with reference to the drawings and specific embodiments.

In descriptions of the embodiments of the application, it should be noted that unless otherwise specified and defined, a term "connection" should be understood in a broad sense. For example, "connection" may be an electrical connection, or may be communication between interiors of two elements; may be a direct connection, or may be an indirect connection through an intermediate medium. Specific meaning of the above term may be understood by those of ordinary skill in the art according to specific situations.

It should be noted that terms "first\second\third" involved in the embodiments of the application are only intended to distinguish similar objects and do not represent a specific order for the objects, and it may be understood that "first\second\third" may be interchanged in a specific order or sequence if allowable. It should be understood that the objects distinguished by "first\second\third" may be interchanged where appropriate, to enable the embodiments of the application described here to be implemented in an order other than those shown or described here.

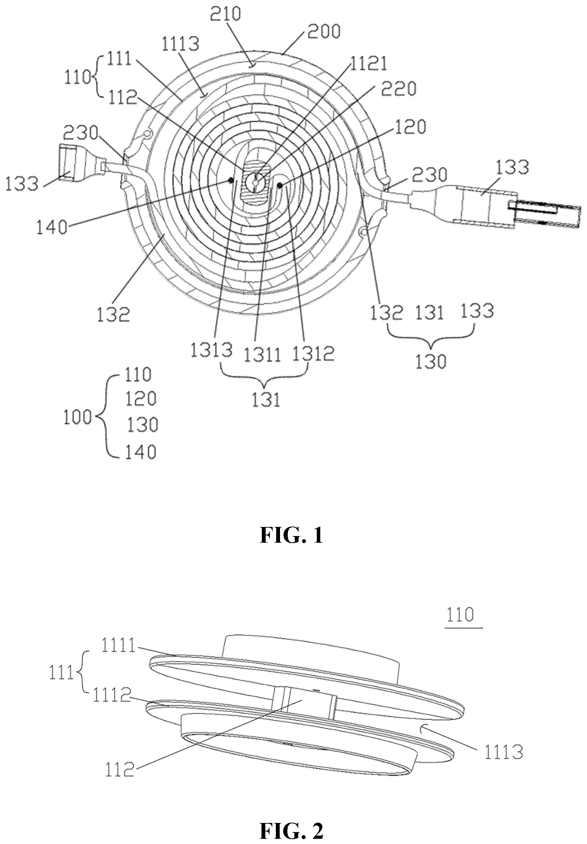

A cable receiving device 100, a data cable device and an ultrathin telescopic data cable device in the embodiments of the application will be described in detail below with reference to FIG. 1 to FIG. 17.

The cable receiving device 100 comprises a rotation member 110 and a cable 130. The cable 130 comprises a fixation section 131 and winding sections 132, the fixation section 131 is fixed to the rotation member 110, and the winding sections 132 can be wound on an outside of the fixation section 131.

In the related art, there is usually no structure provided for receiving the cable, the cable is directly placed on a desktop or in a bag, and often intertwined with other items on the desktop or in the bag. It is necessary to separate the cable n from the wound items before use, which is time-consuming, and results in a poor user experience. According to the cable receiving device 100 of the application, the cable 130 comprises a fixation section 131 and winding sections 132, the fixation section 131 is fixed to the rotation member 110, and the winding sections 132 can be wound on the outside of the fixation section 131. **In** this way, the cable 130 will not intertwine with other items, which saves time for separating the cable 130 from the wound items, and may greatly improve user experience.

In the embodiments of the application, manners of fixing the fixation section 131 to the rotation member 110 are not limited. For example, in some embodiments, the fixation section 131 may be fixed to the rotation member 110 through a snap-fitting structure or adhesive glue.

For example, the rotation member 110 comprises a first seat 111 and a first connection component 112. The first seat 111 defines a receiving space 1113, and the first connection component 112 is arranged in the receiving space 1113 in an axial direction of the rotation member 110. The cable receiving device further comprises a first strip-shaped member 120. The first strip-shaped member 120 is arranged in the receiving space 1113 in the axial direction of the rotation member 110, and a first gap is defined between the first strip-shaped member 120 and the first connection component 112. The cable 130 comprises the fixation section 131, a first part 1311 of the fixation section 131 is snapped in the first gap, and a second part 1312 of the fixation section 131 is wound around a periphery of the first strip-shaped member 120.

In some examples, the cable receiving device comprises a rotation member and a cable, and the rotation member is usually provided with a fixation space and a winding space located outside the fixation space. A part of the cable is fixed in the fixation space, and another part of the cable is wound in the winding space. Since it needs to provide the fixation space for the cable, volume of the rotation member is large, and space for arranging the rotation member is large. In the case that the first gap is defined between the first strip-shaped member 120 and the first connection component 112, the first part 1311 of the fixation section 131 is snapped in the first gap, and the second part 1312 of the fixation section 131 is wound around the periphery of the first strip-shaped member 120, fixation of the fixation section 131 of the cable 130 may be achieved by the first strip-shaped member 120 and the first connection component 112, and it is unnecessary for the rotation member 110 to provide the fixation space for fixing the fixation section 131. Therefore the space for arranging the rotation member 110 may be reduced, and a miniaturized cable receiving device 100 may be achieved.

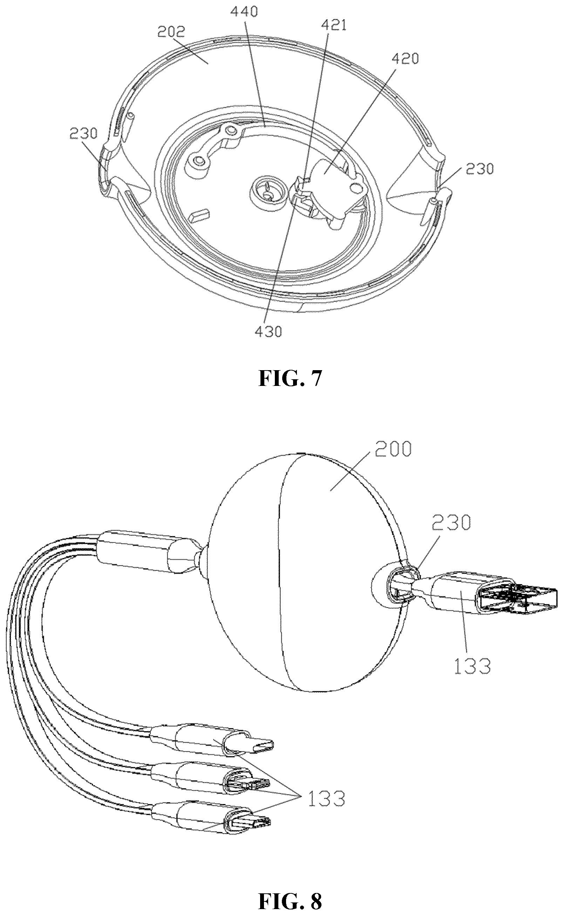

As shown in FIG. 1 and FIG. 8, an embodiment of the application further describes a data cable device, the data cable device comprises a housing 200 and the cable receiving device 100 in the above embodiment of the application. The housing 200 is provided with an accommodation cavity 210 and a second connection component 220 located in the accommodation cavity 210. The rotation member 110 is arranged in the accommodation cavity 210, and the second connection component 220 is rotatably connected to the first connection component 112, so that the rotation member 110 may rotate in the accommodation cavity 210 by rotatable connection of the second connection component 220 to the first connection component 112.

The housing 200 may further comprise two openings 230 in communication with the accommodation cavity 210 respectively, so that two free ends of the cable 130 may pass through the two openings 230 to extend out of the housing 200. The two openings 230 may be arranged at an interval in a circumferential direction of the housing 200. As an example, the two openings 230 may be located at opposite sides of the housing 200 respectively.

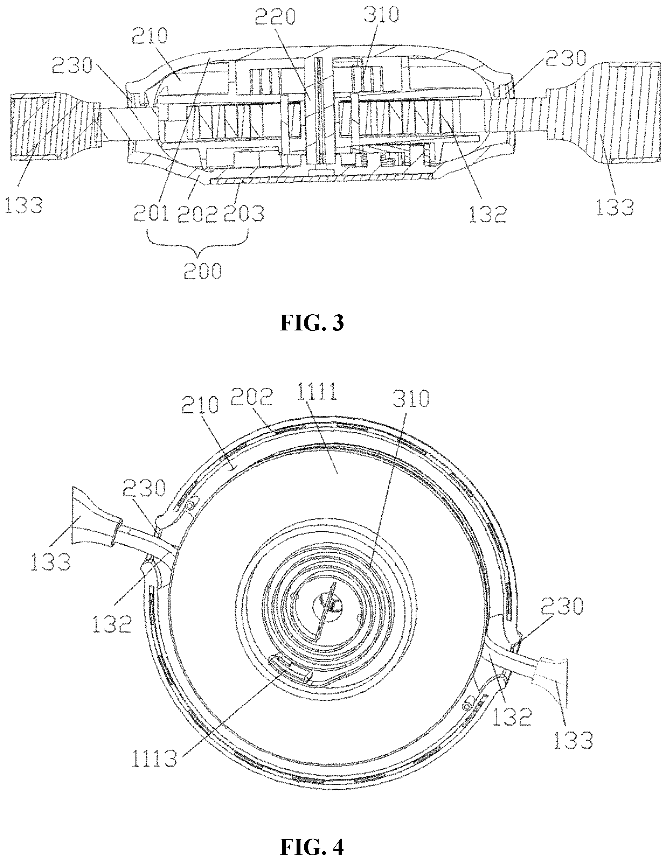

Structures of the housing 200 are not limited. For example, as shown in FIG. 3, the housing 200 may comprise a top shell 201 and a bottom shell 202. The accommodation cavity 210 and the two openings 230 are defined between the top shell 201 and the bottom shell 202. The second connection component 220 is connected to the top shell 201, or the second connection component 220 may also be connected to the bottom shell 202 by screws. The housing 200 may further comprise a cover plate 203 arranged to cover a side of the bottom shell 202 opposite to the top shell 201, to hide a connection area of the bottom shell 202 and the top shell 201, so that the entire appearance of the data cable device is neater.

The manners of rotatably connecting the second connection component 220 to the first connection component 112 are not limited.

For example, in some embodiments, as shown in FIG. 1, the first connection component 112 is provided with a through hole 1121 arranged in an axial direction of the rotation member 110. The second connection component 220 is inserted into the through hole 1121, and the second connection component 220 may rotate in the through hole 1121, so that the rotation member 110 may rotate in the accommodation cavity 210.

For another example, in some other embodiments, the first connection component 112 is provided with a first protruded column arranged in the axial direction of the rotation member 110, the second connection component 220 comprises a groove in which the first protruded column is inserted, and the first protruded column may rotate in the groove, so that the rotation member 110 may rotate in the accommodation cavity 210.

In the embodiment of the application, structures of the first seat 111 of the rotation member 110 are not limited.

For example, in some embodiments, as shown in FIG. 2, the first seat 111 is provided with a first plate 1111 and a second plate 1112 arranged at an interval in the axial direction of the rotation member 110. The receiving space 1113 is defined between the first plate 1111 and the second plate 1112. The first connection component 112 is connected to the first plate 1111 and the second plate 1112; and the first strip-shaped member 120 is connected to the first plate 1111 and the second plate 1112, so that the cable 130 may be received between the first plate 1111 and the second plate 1112, and the cable 130 may be prevented from being worn. Furthermore, plate-shaped structures may also reduce weight of the first seat 111, and achieve lightness and thinness of the rotation member 110.

Here, the first plate 1111, the second plate 1112 and the first connection component 112 may be different parts of a single structural member. Of course, the first plate 1111, the second plate 1112 and the first connection component 112 may also be separate structural members, and in this case, the first plate 1111, the second plate 1112 and the first connection component 112 may be connected to one another by welding, adhesion or other manners.

Here, the first strip-shaped member 120 may be connected to the first plate 1111 and the second plate 1112 by tight fit, welding, adhesion or other manners.

Here, the shape of the first plate 1111 is not limited. For example, the first plate 1111 may be a disk-shaped structure, and in this case, an axis of the first plate 1111 may be a rotation axis of the rotation member 110.

Here, the shape of the second plate 1112 is not limited. For example, the second plate 1112 may be a disk-shaped structure, and in this case, an axis of the second plate 1112 may be a rotation axis of the rotation member 110.

Each of the second plate 1112 and the first plate 1111 may be the disk-shaped structure, and diameter of the second plate 1112 may be the same as or substantially the same as diameter of the first plate 1111. Of course, the diameter of the second plate 1112 may also be different from the diameter of the first plate 1111.

Of course, in some other embodiments, the first seat 111 may comprise only the first plate 1111 or the second plate 1112, and in this case, the receiving space 1113 is located on one side of the first plate 1111 or the second plate 1112; the first connection component 112 and the first strip-shaped member 120 may be arranged on one side of the first plate 1111 or the second plate 1112.

The first connection component 112 is configured to be connected to the second connection component 220 of the housing 200, to allow the rotation member 110 to rotate relative to the housing 200.

The structure of the first connection component 112 is not limited. For example, in some implementations, the first connection component 112 may be a strip-shaped structure. The shape of cross section of the first connection component 112 is not limited. For example, the cross section of the first connection component 112 may be circular, and in this case, the first connection component 112 may be a columnar structure. In another example, the first connection component 112 has a first width direction and a second width direction. The radial size of the first connection component along the first width direction is relatively large, and the radial size of the first connection component along the second width direction is a relatively small, that is, the cross section of the first connection component 112 is non-circular. In an example, the cross section of the first connection component 112 is rectangular. In another example, the cross section of the first connection component 112 is elliptical, and in this case, a surface of the first connection component 112 is an arc surface, which may prevent the cable 130 from being worn by the first connection component 112. In yet another example, the first connection component 112 is provided with two flat surfaces opposite to one another and two convex arc surfaces opposite to one another on a periphery of the first connection component. The two flat surfaces are connected to the two convex arc surfaces respectively, so that the surfaces of the first connection component 112 on the periphery transition smoothly, to prevent the cable 130 from being worn by the first connection component 112.

In the embodiment of the application, the first strip-shaped member 120 is arranged in the receiving space 1113 along the axial direction of the rotation member 110. The first gap is defined between the first strip-shaped member 120 and the first connection component 112, to fix the fixation section 131 of the cable 130 through the first gap.

The shape of the first strip-shaped member 120 is not limited. For example, a surface of the first strip-shaped member 120 surrounded by the fixation section 131 is an arc surface. In some examples, the cable receiving device comprises a rotation member and a cable, and the rotation member is usually provided with a fixation space and a winding space located on the outside the fixation space. The fixation space is in communication with the winding space through a wire snapping slot, a part of the cable is fixed in the fixation space through the wire snapping slot, and another part of the cable is wound in the winding space. The cable is liable to be scratched by corners of a periphery wall of the wire snapping slot and thus damaged. According to the present application, the first gap is defined between the first strip-shaped member 120 and the first connection component 112, the first part 1311 of the fixation section 131 is snapped in the first gap, the second part 1312 of the fixation section 131 is wound around the periphery of the first strip-shaped member 120, and the surface of the first strip-shaped member 120 surrounded by the fixation section 131 is an arc surface, which may prevent the cable 130 form being scratched by the first strip-shaped member 120, and may ensure the service life of the cable 130.

In an example, the first strip-shaped member 120 may be a columnar structure. The first strip-shaped member 120 with a columnar shape may not only prevent the cable 130 from being scratched by the first strip-shaped member 120, but also reduce space for arranging the first strip-shaped member 120, thereby reducing the volume of the rotation member 110 and achieving miniaturization of the cable receiving device 100.

As shown in FIG. 1, in some optional implementations of the embodiment of the application, the cable receiving device 100 may further comprise a second strip-shaped member 140. The second strip-shaped member 140 is arranged in the receiving space 1113 along the axial direction of the rotation member 110. A second gap is defined between the second strip-shaped member 140 and the first connection component 112. The fixation section 131 may further comprise a third part 1313 located at an end of the first part 1311 away from the second part 1312, and the third part 1313 is snapped in the second gap. Parts of the fixation section 131 located at two ends of the third part 1313 are arranged around a periphery of the first connection component 112. In this case, two parts of the fixation section 131 are snapped in the gap, and the fixation section 131 may be fixed more firmly by the second strip-shaped member 140, to prevent the fixation section 131 from moving relative to the rotation member 110.

In the implementation, the shape of the second strip-shaped member 140 is not limited. For example, a surface of the second strip-shaped member 140 facing the first connection component 112 is an arc surface, so that the third part 1313 of the fixation section 131 may be held by the arc surface of the second strip-shaped member 140, which may prevent the cable 130 from being scratched by the second strip-shaped member 140, and may ensure the service life of the cable 130.

In an example, the second strip-shaped member 140 may be a columnar structure. The second strip-shaped member 140 with a columnar shape may not only prevent the cable 130 from being scratched by the second strip-shaped member 140, but also reduce space for arranging the second strip-shaped member 140, thereby reducing the volume of the rotation member 110 and achieving miniaturization of the cable receiving device 100.

In the implementation, the second strip-shaped member 140 and the first strip-shaped member 120 may be arranged at an interval in a circumferential direction of the first connection component 112. For example, as shown in FIG. 1, the second strip-shaped member 140 and the first strip-shaped member 120 are located at opposite sides of the first connection component 112, so as to fix the fixation section 131 of the cable 130 by the opposite sides of the first connection component 112. In this way, the fixation section 131 of the cable 130 is fixed more firmly.

In an example, as shown in FIG. 1, the first connection component 112 has a first width direction and a second width direction, the radial size of the first connection component in the first width direction is relatively large, and the radial size of the first connection component in the second width direction is a relatively small. The first strip-shaped member 120 and the second strip-shaped member 140 are located at opposite sides of the first connection component 112 in the second width direction. The first connection component 112, the first strip-shaped member 120 and the second strip-shaped member 140 form a winding structure, and the winding sections 132 of the cable 130 are wound along a circumferential direction of the winding structure formed by the first connection component 112, the first strip-shaped member 120 and the second strip-shaped member 140. In this way, the size of the wound winding section 132 in the first width direction is closer to size of the wound winding section 132 in the second width direction, and the shape of the wound winding section 132 is nearly a disk shape, and thus the shape of the winding section 132 may be closer to the disk-shaped rotation member 110.

In the embodiment of the application, as shown in FIG. 1 and FIG. 8, the cable 130 may comprise winding sections 132. The winding sections 132 are located at two ends of the fixation section 131 respectively, and can be wound on the outside of the fixation section 131 along a circumferential direction of the fixation section 131, so that two winding sections 132 are received in the receiving space 1113. The two winding sections 132 may also extend out of the housing 200 through the two openings 230 of the housing 200, to increase an effective usage length of the data cable device.

The cable 130 may further comprise two interface members 133, the two interface members 133 are connected to respective ends of the two winding sections 132 away from the fixation section 131, and at least a part of the two interface members 133 is located outside the housing 200, so that when the data cable device needs to be used, the two interface members 133 correspond to the interfaces for connecting two different devices. By means of the interfaces, the two different devices may transmit signals, or may be charged, through the data cable device.

Here, each of the two interface members 133 may provide only one plug interface, or may provide multiple plug interfaces, and types of multiple plug interfaces may be different from each other, so that the data cable device may be electrically connected to external devices with different interfaces. In an example, as shown in FIG. 8, one of the two interface members 133 comprises a plug interface, and another interface member 133 comprises three different types of plug interfaces.

When an operator pulls one or two ends of the cable 130 located outside the housing 200, the rotation member 110 rotates relative to the housing 200, the two winding sections 132 located in the housing 200 extend out of the housing 200 from the two openings 230, and a distance between the two interface members 133 is increased. When the operator continuously pulls one or two ends of the cable 130 located outside the housing 200, the distance between the two interface members 133 is further increased, so that the data cable device may adaptively adjust the distance between the two interface members 133, to meet a distance between two devices each connected to a respective one of the two interface members 133. When the distance between the two interface members 133 is sufficient to allow the two interface members 133 to be plugged into the interfaces of the two devices respectively, the operator may stop pulling one or two ends of the cable 130 located outside the housing 200. At this time, once the operator stops pulling one or two ends of the cable 130 located outside the housing 200, the rotation member 110 may directly stop rotating relative to the housing 200, or the rotation member 110 may stop rotating relative to the housing 200 based on a positioning assembly 400 of the data cable device.

For example, in some embodiments, the cable receiving device 100 may further comprise an operation member connected to the rotation member 110. A part of the operation member passes through a hole of the housing 200 and protrudes out of the housing 200. When the operator pulls one or two ends of the cable 130 located outside the housing 200, the rotation member 110 drives the operation member to rotate in the hole. When the operator stops pulling one or two ends of the cable 130 located outside the housing 200, the rotation member 110 directly stops rotating due to a friction force between the rotation member 110 and the housing 200. When the winding sections 132 located outside the housing 200 need to be received in the receiving space 1113 of the rotation member 110, the operation member may be manually rotated to enable the operation member to drive the rotation member 110 to rotate in an opposite direction, so that the winding sections 132 located outside the housing 200 enter the housing 200 from the opening 230 and are received in the receiving space 1113, and the distance between the two interface members 133 is reduced.

For another example, in some other embodiments, the first seat 111 is provided with a first plate 1111 and a second plate 1112 arranged at an interval in the axial direction of the rotation member 110. As shown in FIG. 4, the data cable device may further comprise a first elastic member 310, the first elastic member 310 is arranged on a side of the first plate 1111 away from the second plate 1112. A first end of the first elastic member 310 is fixed to the housing 200, and a second end of the first elastic member 310 is fixed to the first plate 1111, to provide a restoring force for drive the rotation of the rotation member 110. That is, when the operator pulls one or two ends of the cable 130 located outside the housing 200, the first elastic member 310 deforms. When the operator stops pulling one or two ends of the cable 130 located outside the housing 200, the rotation member 110 stops rotating due to a limiting function of the positioning assembly 400 of the data cable device. When the winding sections 132 located outside the housing 200 need to be received in the receiving space 1113 of the rotation member 110, the operator may gently pull one or two ends of the cable 130 located outside the housing 200 again, to cause the rotation member 110 to break free from the limiting function of the positioning assembly 400 of the data cable device, and rotate in an opposite direction due to the deformation of the first elastic member 310. As such, the winding sections 132 located outside the housing 200 are driven to enter the housing 200 from the opening 230 and are received in the receiving space 1113, and the distance between the two interface members 133 is reduced.

Here, the first elastic member 310 may be a coil spring. The first end of the first elastic member 310 may be fixed to the second connection component 220. A fixation wall 1114 may be arranged at a side of the first plate 1111 away from the second plate 1112, and the second end of the first elastic member 310 may be fixed to the fixation wall 1114 by snap-fitting, as shown in FIG. 4.

Of course, the data cable device may also stop rotation of the rotation member 110 relative to the housing 200 by other manners. For example, an external gripping structure is provided to grip a part of each winding section 132 located at the opening 230. The gripping structure is placed at the opening 230 by snap-fitting, thereby preventing the winding sections 132 from entering the housing 200 from the opening 230, and stopping rotation of the rotation member 110 relative to the housing 200. When the winding sections 132 located outside the housing 200 need to be received in the receiving space 1113, the external gripping structure may be disengaged from the winding sections 132, and at this time, the rotation member 110 rotates in an opposite direction due to the deformation of the first elastic member 310. Then, the winding sections 132 located outside the housing 200 are driven to enter the housing 200 from the opening 230 and received in the receiving space 1113, and the distance between the two interface members 133 is reduced. In an example, the gripping structure may be a clip.

Here, structures of the positioning assembly 400 are not limited.

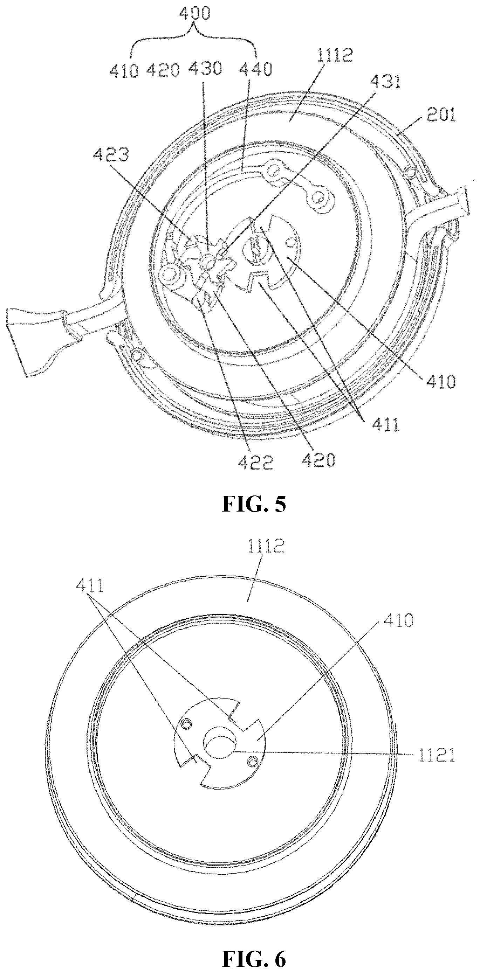

For example, as shown in FIG. 5, FIG. 6 and FIG. 7, the positioning assembly 400 may comprise a motion gear 410, a connection member 420, a limit gear 430, and a return member 440. The motion gear 410 is fixed to a side of the second plate 1112 away from the first plate 1111, the connection member 420 and the limit gear 430 are rotatably arranged on the bottom shell 202 of the housing 200. An end of the return member 440 is abutted against the connection member 420, and another end of the return member 440 is fixed to the bottom shell 202 of the housing 200. In case that the cable receiving device 100 rotates, the cable receiving device 100 drives the motion gear 410 to rotate. The motion gear 410 is provided with at least one first groove 411. The number of the first grooves 411 has a certain influence on a positioning length of the data cable each positioning. The connection member 420 is provided with a first protrusion 421 which may cooperate with the first groove 411. The connection member 420 is further provided with a second protrusion 422 and a third protrusion 423 protruded in the axial direction. The limit gear 430 is rotatably connected to the housing 200, and the limit gear 430 is located between the first protrusion 421 and the second protrusion 422. The connection member 420 may swing with the motion of the motion gear 410, to enable the first protrusion 421 and the second protrusion 422 to cooperate with different limit grooves 431 in the limit gear 430, so as to allow the first protrusion 421 to engage into the first groove 411 and disengage from the first groove 411. An end of the return member 440 is abutted against the connection member 420, and another end of the return member 440 is connected to the bottom shell 202 of the housing 200, to accumulate energy during the rotation of the motion gear 410 in a first direction and release energy during the rotation of the motion gear 410 in a direction opposite to the first direction. The return member 440 is arranged at a side of the connection member 420 and cooperates with the motion gear 410, and elastically deforms with the motion of the motion gear 410. Rotation of the rotation member 110 may drive the motion gear 410 to rotate and thus cause the return member 440 to elastically deform, to provide a pre-tightening force for the rotation member 110 to swing toward or away from a side of the return member 440. Due to the rotation of the rotation member 110, the cable 130 wound around the rotation member 110 may freely extend or retract. Through cooperation between the rotation member 110 and the motion gear 410, the rotation member 110 may position the cable 130 even when the cable 130 wound around the rotation member 110 is pulled out of the housing by an arbitrary length. When the user pulls the cable 130 out of the housing by an appropriate length, the user may directly release the cable 130, and the cooperation of the rotation member 110 with the motion gear 410, the connection member 420 and the return member 440 can maintain the appropriate length of the cable 130 for use. It may be seen that design of the positioning assembly 400 cooperating with the rotation member 110 simplifies a telescopic structure of the data cable and effectively improves practicability of the data cable.

As shown in FIG. 5 and FIG. 6, the motion gear 410 comprises at least two first grooves 411, and the first protrusion 421 is a protrusion cooperating with the first groove 411. Through cooperation of the first groove 411 with the first protrusion 421, on one hand, the motion gear 410 can drive the connection member 420 to swing; on the other hand, when the connection member 420 moves by a certain distance, the first protrusion 421 may slide out of the first groove 411, and rebound due to the pre-tightening force, to cooperate with a next first groove 411. The presence of at least two first grooves 411 may ensure that the connection member 420 does not remain in a state of non-cooperation with the first groove 411 for a long time when the motion gear 410 rotates, thereby avoiding a situation that the cable 130 cannot be stopped in time. It may be seen that design of the first protrusion 421 cooperating with the first groove 411 makes the structure of the data cable more reasonable and makes the use of the data cable more smooth.

The limit gear 430 is provided with limit grooves 431 with different depths, the limit grooves are arranged at intervals. The second protrusion 422 and the third protrusion 423 are arranged at two ends of the connection member 420, and cooperate with the connection member 420.

As shown in FIG. 5 and FIG. 7, when the cable 130 is pulled, the motion gear 410 drives the connection member 420 to swing through the second protrusion 422, to urge the second protrusion 422 into contact with the limit gear 430 and push the limit gear 430 to rotate. When stop pulling the cable, the rotation member 110 may rotate back by a short distance due to an elastic force of the return member 440.The back-rotation of the rotation member 110 and the pre-tightening force provided by the return member 440 may drive the connection member 420 to swing back by a certain distance, and at this time, the second protrusion 422 of the connection member 420 cooperates with the limit groove 431 of the limit gear 430 to fix the connection member 420 at the current position, thereby fixing the motion gear 410 cooperating with the first protrusion 421 at the current position, and thus achieving fixation of the rotation member 110 and the cable 130. When the cable 130 needs to be retracted, the cable 130 is pulled by the user to extend by an appropriate distance and the motion gear 410 drives the connection member 420 to swing by a certain distance, to urge the third protrusion 423 to push the limit gear 430 to rotate, so as to rotate the limit groove 431 to a predetermined position. When the cable is released by the user, due to rotation of the motion gear 410 and presence of the pre-tightening force, the connection member 420 swings back, the third protrusion 423 cooperates with the limit groove 431, and the first protrusion 421 no longer cooperates with the first groove 411 of the motion gear 410, the motion gear 410 drives the rotation member 110 to rotate back, to complete the retraction of the cable 130.

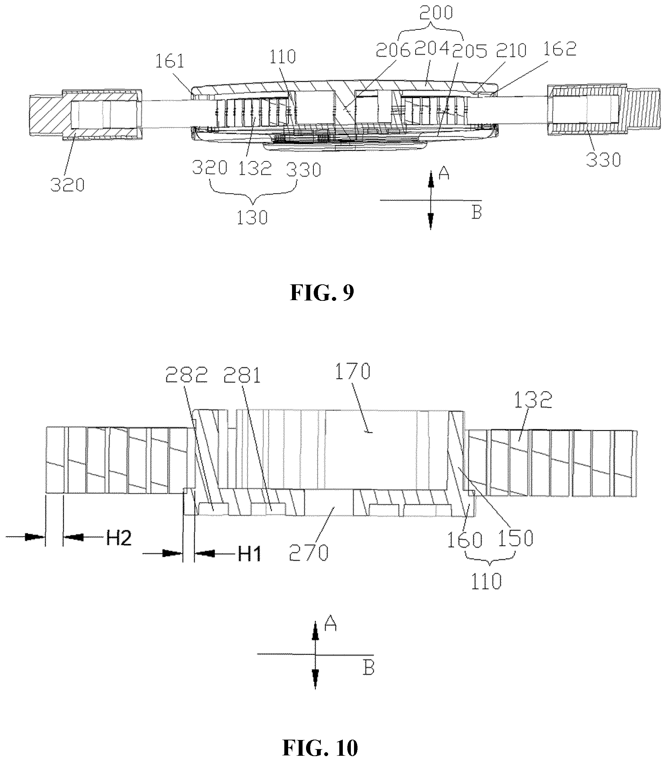

An ultrathin telescopic data cable device recorded in an embodiment of the application will be described in detail below with reference to FIG. 9 to FIG. 17.

The ultrathin telescopic data cable device comprises a housing 200 and the cable receiving device in the above embodiment of the application. The housing 200 is provided with an accommodation cavity 210. The rotation member 110 is rotatably arranged in the accommodation cavity 210. The cable 130 comprises a fixation section 131 and winding sections 132, the fixation section 131 is fixed to the rotation member 110, the winding sections 132 can be wound in a circumferential direction of the rotation member 110, and the wound parts of the winding sections 132 are located in a space defined by the housing 200.

In some examples, the data cable device comprises a housing, a rotation member and a cable, and the rotation member is usually provided with a receiving groove for receiving the cable. For example, at two ends in an axial direction of the rotation member, two opposite walls are arranged, and the receiving groove is formed between the two opposite walls. In this case, the rotation member has a large thickness in the axial direction. Due to the large thickness of the housing accommodating the rotation member, the entire data cable device is bulky. In the ultrathin telescopic data cable device of present application, the cable 130 comprises a fixation section 131 and winding sections 132, the fixation section 131 is fixed to the rotation member 110, the winding sections 132 can be wound in a circumferential direction of the rotation member 110, and the wound parts of the winding sections 132 are located in a space defined by the housing 200. That is, it is unnecessary to provide the receiving groove in the rotation member 110, the thickness of the rotation member 110 in the axial direction is small, and thus the thickness of the housing 200 may also be small, so that lightness and thinness of the ultrathin telescopic data cable device is achieved.

In the embodiment of the application, a thickness direction of the ultrathin telescopic data cable device may be the same as or substantially the same as the axial direction of the rotation member 110.

In the embodiment of the application, structures of the housing 200 are not limited. For example, the housing 200 may be a disk-shaped structure.

As shown in FIG. 9, the housing 200 may has a first wall 204 and a second wall 205 arranged opposite to one another in the thickness direction of the ultrathin telescopic data cable device. The wound part of each winding section 132 is located in a space defined by the first wall 204 and the second wall 205, that is, the wound part of each winding section 132 is limited by the first wall 204 and the second wall 205 of the housing 200, and it is unnecessary for the rotation member 110 to has limit walls in the axial direction, so that the thickness in the axial direction of the rotation member 110 is small, and the thickness of the housing 200 may also be small, so that lightness and thinness of the ultrathin telescopic data cable device is achieved.

In the thickness direction of the ultrathin telescopic data cable device, there is a gap between cable 130 and at least one of the first wall 204 and the second wall 205, that is, there is a gap between the cable 130 and the first wall 204 of the housing 200 or the second wall 205 of the housing 200, or there are gaps between the cable 130 and the first wall 204 and between the cable 130 and the second wall 205. A minimum thickness of the ultrathin telescopic data cable device is equal to a sum of width of the cable 130, thickness of the first wall 204, thickness of the second wall 205 and the gap(s). Therefore, lightness and thinness of the ultrathin telescopic data cable device may be achieved.

There is a gap between the cable 130 and at least one of the first wall 204 of the housing 200 and the second wall 205 of the housing 200 may be that there is a first gap between the cable 130 and the first wall 204 of the housing 200, and there is a second gap between the cable 130 and the second wall 205 of the housing 200, so that the cable 130 may freely extend or retract in the accommodation cavity 210, without being worn by the first wall 204 and the second wall 205. The minimum thickness of the ultrathin telescopic data cable device is equal to a sum of width of the cable 130, thickness of the first wall 204, thickness of the second wall 205, the first gap and the second gap.

There is a gap between the cable 130 and at least one of the first wall 204 of the housing 200 and the second wall 205 of the housing 200 may also be that there is a first gap between the cable 130 and the first wall 204 of the housing 200, and there is no gap between the cable 130 and the second wall 205 of the housing 200, so that the cable 130 may freely extend or retract in the accommodation cavity 210, without being worn by the first wall 204. The minimum thickness of the ultrathin telescopic data cable device is equal to a sum of width of the cable 130, thickness of the first wall 204, thickness of the second wall 205 and the first gap.

There is a gap between the cable 130 and at least one of the first wall 204 of the housing 200 and the second wall 205 of the housing 200 may also be that there is a second gap between the cable 130 and the second wall 205 of the housing 200, and there is no gap between the cable 130 and the first wall 204 of the housing 200, so that the cable 130 may be freely extend or retract in the accommodation cavity 210, without being worn by the second wall 205. The minimum thickness of the ultrathin telescopic data cable device is equal to a sum of width of the cable 130, thickness of the first wall 204, thickness of the second wall 205 and the second gap.

Here, no other structural members are present between the first wall 204 and the wound part of each winding section 132, and no other structural members are present between the second wall 205 and the wound part of each winding section 132, so that the wound part of each winding section 132 is limited in the thickness direction of the ultrathin telescopic data cable device directly by the first wall 204 and the second wall 205, to prevent the winding sections 132 from moving in the thickness direction of the ultrathin telescopic data cable device.

The structure of the first wall 204 is not limited. For example, in some embodiments, the first wall 204 may be a flat plate-shaped structure. For another example, in some other embodiments, the first wall 204 may be a curved plate-shaped structure.

The structure of the second wall 205 is not limited. For example, in some embodiments, the second wall 205 may be a flat plate-shaped structure. For another example, in some other embodiments, the second wall 205 may be a curved plate-shaped structure.

As shown in FIG. 9, the housing 200 is also provided with a first hole 161 and a second hole 162 in communication with the accommodation cavity 210. There may be two winding sections 132, and the two winding sections 132 are located at two ends of the fixation section 131 respectively. The cable 130 may further comprise a first interface member 320 and a second interface member 330. The first interface member 320 is connected to one of the two winding sections 132, at least a part of the first interface member 320 passes through the first hole 161 and is located outside the housing 200. The second interface member 330 is connected to another one of the two winding sections 132, at least a part of the second interface member 330 passes through the second hole 162 and is located outside the housing 200. The ultrathin telescopic data cable device can be plugged into an interface of an first external device by the first interface member 320, and can be plugged into an interface of an second external device by the second interface member 330, so that electrical connection between the first device and the second device may be achieved by the ultrathin telescopic data cable device, to achieve charging function, signal transmission function, etc.

The number of interfaces of the first interface member 320 is not limited. For example, in some embodiments, the first interface member 320 may comprise at least two first interfaces, and types of the at least two first interfaces may be the same or different. In an example, the at least two first interfaces may comprise at least two of a Universal Serial Bus (USB) interface, a Type-C interface, a micro type interface and a lightning interface.

The number of interfaces of the second interface member 330 is not limited. For example, in some embodiments, the second interface member 330 may comprise at least two second interfaces, and types of the at least two second interfaces may be the same or different. As an example, the at least two second interfaces may comprise at least two of a USB interface, a Type-C interface, a micro interface and a lightning interface.

The interface type of the first interface member 320 may be the same as or different from the interface type of the second interface member 330. As an example, as shown in FIG. 9, the first interface member 320 comprises a Type-C interface, and the second interface member 330 also comprises a Type-C interface.

The first hole 161 and the second hole 162 may be arranged at an interval along a periphery of the housing 200. As an example, as shown in FIG. 9, the first hole 161 and the second hole 162 are located at opposite sides of the housing 200.

The housing 200 may comprise a top shell 201 and a bottom shell 202, the top shell 201 may be fixedly connected to the bottom shell 202 by screws, snap-fitting structures or the like, and the accommodation cavity 210 and the first hole 161 and the second hole 162 in communication with the accommodation cavity 210 are defined between the top shell 201 and the bottom shell 202.

The top shell 201 may comprise a first wall 204 and a sidewall along a periphery of the first wall 204. The bottom shell 202 may comprise a second wall 205 and a sidewall along a periphery of the second wall 205. The sidewall along the periphery of the first wall 204 and the sidewall along the periphery of the second wall 205 together define the first hole 161 and the second hole 162.

The top shell 201 may comprise a third connection component 206. The bottom shell 202 may comprise a first fixation hole 180, the third connection component 206 may be provided with a second fixation hole, and the first fixation hole 180 may be connected with the second fixation hole by screws. Of course, the top shell 201 may also be connected to the bottom shell 202 by snap-fitting means.

In the embodiment of the application, the structure of the rotation member 110 is not limited. For example, the rotation member 110 may be a columnar structure. For another example, the rotation member 110 may be a disk-shaped structure.

The rotation member 110 may be rotatably arranged in the accommodation cavity 210 by a rotation shaft structure.

For example, as shown in FIG. 9 and FIG. 10, in some embodiments, the housing 200 may further comprise the third connection component 206 arranged in the accommodation cavity 210 along the axial direction of the rotation member 110. A connection through hole 270 is arranged at a location of the rotation member 110 corresponding to the third connection component 206. The third connection component 206 is inserted into the connection through hole 270 and may rotate in the connection through hole 270, so that the rotation member 110 is rotatably arranged in the accommodation cavity 210. In the case that the housing 200 comprises the first wall 204 and the second wall 205, the third connection component 206 and the first wall 204 may be different parts of a single structural member. Of course, the third connection component 206 may also be connected to the first wall 204 by welding, adhesion or other manners. The connection between the third connection component 206 may be detachably connected to the second wall 205 by screws or snap-fitting means, to install the rotation member 110 in the housing 200.

For another example, in some other embodiments, the third connection component 206 is provided with a connection protrusion arranged in the axial direction of the rotation member 110, at least one of the first wall 204 and the second wall 205 comprises a connection groove. The connection protrusion is inserted into the connection groove, and may rotate in the connection groove, thus the rotation member 110 may rotate in the accommodation cavity 210.

In some optional implementations of the embodiment of the application, as shown in FIG. 9 and FIG. 10, at least a part of projection of the winding sections 132 on a projection plane B perpendicular to an axis A of the rotation member 110 is located outside a projection area of the rotation member 110 on the projection plane. That is, the rotation member 110 does not provide a space for accommodating the wound parts of the winding sections 132, so that the thickness in the axial direction of the rotation member 110 may be reduced, and the thickness of the housing 200 may be small, so that lightness and thinness of the ultrathin telescopic data cable device is achieved.

In the implementation, the expression "at least a part of projection of the winding sections 132 on a projection plane B perpendicular to an axis A of the rotation member 110 is located outside a projection area of the rotation member 110 on the projection plane" can be understood to mean that at least a part of the projection of wound parts of the winding sections 132 is located outside the projection area of the rotation member 110, or at least a part of the projection of unwound parts of the winding sections 132 is located outside the projection area of the rotation member 110.

In the implementation, the expression "at least a part of projection of the winding sections 132 is located outside the projection area of the rotation member 110" can be understood to mean that all of the projection of the winding sections 132 is located outside the projection area of the rotation member 110. The expression "at least a part of projection of the winding sections 132 is located outside the projection area of the rotation member 110" can also be understood to mean that a part of projection of the winding sections 132 is located outside the projection area of the rotation member 110.

In an example, the rotation member 110 may comprise a winding component 150, a first end of the winding component 150 is located at a side of the first wall 204, that is, the first end of the winding component 150 is arranged adjacent to the first wall 204. The fixation section 131 is fixed to the winding component 150, and the winding sections 132 can be wound around a periphery of the winding component 150. The projection of the winding sections 132 on the projection plane B is located outside a projection area of the winding component 150 on the projection plane B.

In the example, the shape of the winding component 150 is not limited. For example, in some embodiments, the winding component 150 may be a columnar structure.

In the example, as shown in FIG. 10, a second end of the winding component 150 is located on a side of the second wall 205, that is, the second end of the winding component 150 is arranged adjacent to the second wall 205. The rotation member 110 may further comprise a positioning component 160 arranged at the second end of the winding component 150. The positioning component 160 is protruded from a periphery of the winding component 150 along the circumferential direction of the winding component 150. A part of the wound part of each winding section 132 is abutted against the positioning component 160. Due to the part of the wound part of each winding section 132 is abutted against the positioning component 160, position of the winding sections 132 in the axial direction of the rotation member 110 may be limited, to force the winding sections 132 to be wound around a predetermined area of the periphery of the winding component 150, to prevent the winding sections 132 from being unduly offset in an axial direction of the winding component 150. A part of projection of the winding sections 132 on the projection plane B is located outside a projection area of the positioning component 160 on the projection plane B, that is, the positioning component 160 is configured to define an axial position of a part of each winding section 132 wound around the winding component 150 at the fixation section 131, while other wound parts of the winding sections 132 are mainly located in the space defined by the housing 200, and their positions are limited by the first wall 204 and the second wall 205 of the housing 200.

The structure of the positioning component 160 is not limited. For example, in some embodiments, the positioning component 160 may be an annular structure. For another example, in some other embodiments, the positioning component 160 may be a strip-shaped structure. For yet another example, in some other embodiments, the positioning component 160 may be a block-shaped structure.

Height of the positioning component 160 protruded from the winding component 150 is not limited. For example, in some embodiments, as shown in FIG. 10, a height H1 of the positioning component 160 protruded from the winding component 150 is less than thickness H2 of the winding section 132, so that not only space for arranging the positioning component 160 may be reduced, but also the axial position of the part of the winding section 132 wound around the winding component 150 at the fixation section 131 may be defined by the positioning component 160.

Of course, in other implementations, the rotation member 110 may comprise only the winding component 150 and does not comprise the positioning component 160, and in this case, the entire projection of the wound parts of the winding sections 132 is located outside the projection area of the rotation member 110.

In the embodiment of the application, the cable 130 comprises a fixation section 131 and winding sections 132. The fixation section 131 is fixed to the rotation member 110, and the winding sections 132 can be wound in a circumferential direction of the rotation member 110. The wound parts of the winding sections 132 are located in a space defined by the housing 200. When the winding sections 132 need to be used, one or two ends of the cable 130 located outside of the housing 200 can be pulled to move the winding sections 132 out of the housing 200, thereby increasing a distance between the first interface member 320 and the second interface member 330, to meet the requirement of electrically connecting two external devices at different distances from each other. When the winding sections 132 need to be received, the winding sections 132 may be placed in the housing 200, thereby reducing the distance between the first interface member 320 and the second interface member 330, to reduce volume of the ultrathin telescopic data cable device, and facilitate tidying or carrying the ultrathin telescopic data cable device.

Manners of fixing the fixation section 131 to the rotation member 110 are not limited. For example, in some embodiments, the rotation member 110 may be provided with a snapping groove, and the fixation section 131 may be fixed to the rotation member 110 by snap-fitting through the snapping groove. For another example, in some other embodiments, the rotation member 110 may be provided with a pressing structure, and the fixation section 131 may be fixed to the rotation member 110 by the pressing structure.

Implementations of receiving the winding sections 132 located outside the housing 200 into the housing 200 are not limited.

For example, in some embodiments, the cable receiving device 130 may further comprise an operation member connected to the rotation member 110. A part of the operation member passes through a through slot of the housing 200 and is extend out of the housing 200. When the operator pulls one or two ends of the cable 130 located outside the housing 200, the rotation member 110 drives the operation member to rotate in the through slot. When the operator stops pulling one or two ends of the cable 130 located outside the housing 200, the rotation member 110 directly stops rotating due to a friction force between the rotation member 110 and the housing 200. When the winding sections 132 located outside the housing 200 need to be received in the housing 200, the operation member may be manually rotated to force the operation member to drive the rotation member 110 to rotate in an opposite direction. In this way, the winding sections 132 located outside the housing 200 are driven to enter into the housing 200 from the first hole 161 and the second hole 162 and received in the housing 200, and the distance between the first interface member 320 and the second interface member 330 is reduced.

For another example, in some other embodiments, the ultrathin telescopic data cable device may further comprise a second elastic member 510, a first end of the second elastic member 510 is fixed to the housing 200, and a second end of the second elastic member 510 is fixed to the rotation member 110, to provide a restoring force for rotation of the rotation member 110. That is, when the operator pulls one or two ends of the cable 130 located outside the housing 200, the second elastic member 510 deforms. When the operator stops pulling one or two ends of the cable 130 located outside of the housing 200, the rotation member 110 stops rotating due to a limiting function of a positioning structure of the ultrathin telescopic data cable device. When the winding sections 132 located outside of the housing 200 need to be received in the accommodation cavity 210, the operator may gently pull one or two ends of the cable 130 located outside of the housing 200 again, to cause the rotation member 110 to break free from the limiting function of the positioning structure of the ultrathin telescopic data cable device, and rotate in an opposite direction due to a deformation force of the second elastic member 510. As such, the winding sections 132 located outside the housing 200 are driven to enter the housing 200 from the first hole 161 or the second hole 162 and received in the housing 200, and the distance between the first interface member 320 and the second interface member 330 is reduced.

Here, the second elastic member 510 may be a coil spring. The first end of the second elastic member 510 may be fixed to the third connection component 206. The second end of the second elastic member 510 may be fixed to the rotation member 110 by snap-fitting.

Of course, the ultrathin telescopic data cable device may also stop rotation of the rotation member 110 relative to the housing 200 by other manners. For example, an external gripping structure is provided to grip a part of the winding section 132 located at the first hole 161 or the second hole 162. The gripping structure is placed at the first hole 161 or the second hole 162 by snap-fitting, thereby preventing the winding section 132 from entering the housing 200 from the first hole 161 or the second hole 162, and stopping rotation of the rotation member 110 relative to the housing 200. When the winding sections 132 located outside the housing 200 need to be received in the housing 200, the external gripping structure may be disengaged from the winding sections 132, and at this time, the rotation member 110 rotates in an opposite direction due to the deformation force of the second elastic member 510. Then, the winding sections 132 located outside the housing 200 are driven to enter the housing 200 from the first hole 161 or the second hole 162, and the distance between the first interface member 320 and the second interface member 330 is reduced. As an example, the gripping structure may be a clip.

Here, the structure of the positioning structure is not limited.

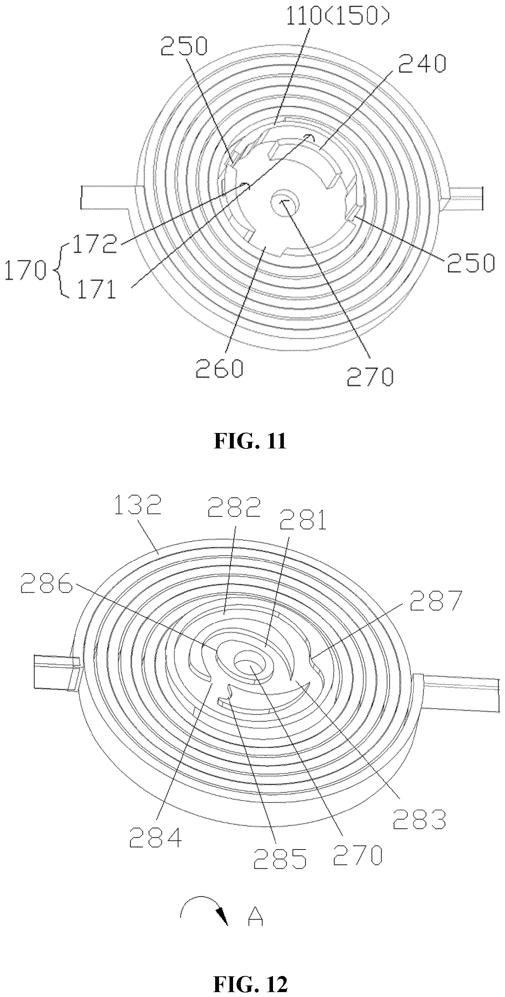

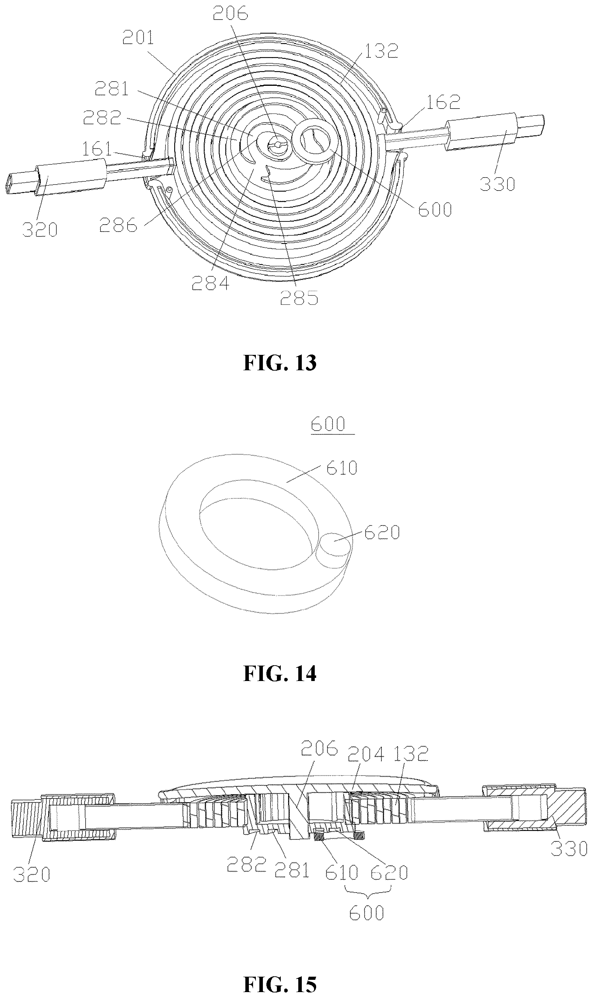

In some optional implementations of the embodiment of the application, a second end of the rotation member 110 is provided with an inner chute 281 in annular shape and an outer chute 282 in annular shape arranged at an interval, and an inlet 283 and an outlet 284 in communication with the inner chute 281 and the outer chute 282. The winding component 150 is also provided with a clamping groove 285 at the outlet 284, as shown in FIG. 12. The ultrathin telescopic data cable device may further comprise a positioning member 600, the positioning member 600 comprises a second seat 610 rotatably arranged on the housing 200 and a positioning protrusion 620 protruded from an end surface of the second seat 610. The positioning protrusion 620 is configured to be engaged in the clamping groove 285, to limit a rotation position of the rotation member 110 relative to the housing 200, as shown in FIG. 13 and FIG. 15.

In the implementation, when the operator pulls one or two ends of the cable 130 located outside the housing 200, the rotation member 110 rotates in the first direction A, the positioning protrusion 620 slides in the inner chute 281, and the second elastic member 510 deforms. When length of the two winding sections 132 of the cable 130 extend out of the housing meet usage requirements, the operator may stop pulling one or two ends of the cable 130 located outside the housing 200, and at this time, the rotation member 110 rotates in a second direction opposite to the first direction A under an action of the deformation force of the second elastic member 510. Then the positioning protrusion 620 slides to be engaged in the clamping groove 285, so that the rotation member 110 stops rotating relative to the housing 200, thereby keep a length of the winding sections 132 located outside the housing 200 unchanged. When the winding sections 132 need to be received, the operator gently pulls one or two ends of the cable 130 located outside the housing 200, to force the positioning protrusion 620 to disengage from the clamping groove 285 and enter the outer chute 282 from the outlet 284. The rotation member 110 continues to rotate in the second direction opposite to the first direction A under the action of the deformation force of the second elastic member 510, to driven the winding sections 132 located outside the housing 200 to enter the housing 200, to receive the winding sections 132 in the housing. When the length of the cable 130 needs to increase again, the operator may pull one or two ends of the cable 130 located outside the housing 200 again, and at this time, the rotation member 110 rotates in the first direction A, the positioning protrusion 620 slides in the outer chute 282 to reach the inlet 283, and then the positioning protrusion 620 enters the inner chute 281 from the inlet 283 and slides in the inner chute 281.

In the implementation, the shape of each of the inner chute 281 and the outer chute 282 is not limited, as long as the positioning protrusion 620 may enter the inner chute 281 from the outer chute 282 through the inlet 283 when the rotation member 110 rotates in the first direction A, and the positioning protrusion 620 may be engaged in the clamping groove 285 and may enter the outer chute 282 from the clamping groove 285 through the outlet 284 when the rotation member 110 rotates in the second direction opposite to the first direction A.

For example, as shown in FIG. 12 and FIG. 13, the rotation member 110 is provided with a first guide protuberance 286 at an inner sidewall of the inner chute 281. The first guide protuberance 286 is located at the outlet 284, to guide the positioning protrusion 620 to slide into the clamping groove 285 from the outlet 284. The rotation member 110 is provided with a second guide protuberance 287 on an outer sidewall of the outer chute 282. The second guide protuberance 287 is located at the inlet 283, to guide the positioning protrusion 620 to slide into the inner chute 281 from the inlet 283.

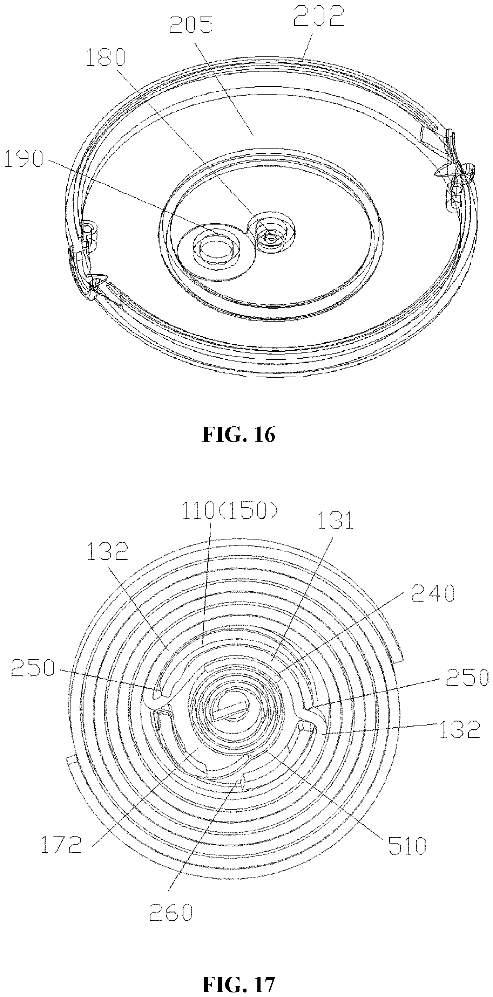

In the implementation, the structure of the second seat 610 is not limited. For example, as shown in FIG. 14 and FIG. 16, the second seat 610 may be an annular structure, and the housing 200 further comprises a second protruded column 190 inserted into an inner cavity of the second seat 610, so that rotatable connection of the positioning member 600 and the housing 200 is achieved by inserting the second protruded column 190 into the inner cavity of the second seat 610. In addition, the presence of the annular second seat 610 may reduce space for arranging the positioning member 600.

In some optional implementations of the embodiment of the application, the ultrathin telescopic data cable device may further comprise a second elastic member 510 arranged on the rotation member 110. At least a part of projection of the second elastic member 510 on a projection plane parallel to an axis of the rotation member 110 is located within a projection area of the fixation section 131 on this projection plane. In this case, at least a part of the second elastic member 510 is arranged in the same space as the fixation section 131 in the thickness direction of the ultrathin telescopic data cable device, to reduce the space for arranging the rotation member 110 in the thickness direction of the ultrathin telescopic data cable device, and thus lightness and thinness of the ultrathin telescopic data cable device is achieved.

In the implementation, the second elastic member 510 is connected to the housing 200, to provide a restoring force for rotation of the rotation member 110.

In the implementation, "at least a part of projection of the second elastic member 510 on the projection plane parallel to the axis of the rotation member 110 is located within the projection area of the fixation section 131 on the projection plane" may be the case that all the projection of the second elastic member 510 is located within the projection area of the fixation section 131. In this case, the second elastic member 510 occupies space for arranging the fixation section 131 in the thickness direction of the ultrathin telescopic data cable device, and it is unnecessary for the second elastic member 510 to occupy space in the thickness direction of the ultrathin telescopic data cable device, so that lightness and thinness of the ultrathin telescopic data cable device may be achieved.

Of course, "at least a part of projection of the second elastic member 510 on the projection plane parallel to the axis of the rotation member 110 is located within the projection area of the fixation section 131 on the projection plane" may be the case that a part of projection of the second elastic member 510 is located within the projection area of the fixation section 131. In this case, a part of the second elastic member 510 occupies space for arranging the fixation section 131 in the thickness direction of the ultrathin telescopic data cable device, and space occupied by the second elastic member 510 in the thickness direction of the ultrathin telescopic data cable device is reduced, so that lightness and thinness of the ultrathin telescopic data cable device may be achieved.

In the implementation, the first end of the second elastic member 510 may be fixed to the housing 200. The manner of fixing the first end of the second elastic member 510 to the housing 200 is not limited. For example, the first end of the second elastic member 510 may be fixed to the third connection component 206 by snap-fitting.

The second end of the second elastic member 510 may be fixed to the rotation member 110. The manner of fixing the second end of the second elastic member 510 to the rotation member 110 is not limited. For example, the second end of the second elastic member 510 may be fixed to the rotation member 110 by snap-fitting.

In the implementation, the position for the second elastic member 510 is not limited. For example, the second elastic member 510 may be arranged at a first end of the rotation member 110, and the fixation section 131 may also be arranged at the first end of the rotation member 110. In order to prevent the fixation section 131 from being worn by the second elastic member 510, one or two partitions may be arranged between the second elastic member 510 and the fixation section 131. As an example, as shown in FIG. 11, a partition wall 240 may be arranged between the second elastic member 510 and the fixation section 131.

Of course, there may be no the partition arranged between the second elastic member 510 and the fixation section 131.

For another example, as shown in FIG. 11 and FIG. 17, the rotation member 110 may be provided with a second groove 170, and an opening of the second groove 170 is located at a first end of the rotation member 110. At least a part of the second elastic member 510 is arranged in the second groove 170. A first end of the second elastic member 510 is fixed to the housing 200, and a second end of the second elastic member 510 is fixed to the rotation member 110, to provide a restoring force for rotation of the rotation member 110. The second elastic member 510 may be protected by the second groove 170, to prevent the deformation of the second elastic member 510 from being affected due to collision with other structures.

In the example, the first end of the rotation member 110 is located at the side of the first wall 204, the first end of the rotation member 110 is an end of the rotation member 110 adjacent to a side the first wall 204, the second end of the rotation member 110 is located on a side of the second wall 205, and the second end of the rotation member 110 is an end of the rotation member 110 adjacent to a side of the second wall 205.

In the example, the second elastic member 510 may be entirely arranged in the second groove 170, or may be partially arranged in the second groove 170.

In the example, the fixation section 131 of the cable 130 may be fixed in the second groove 170, so that by means of the second groove 170, the second elastic member 510 may be accommodated and fixed, therefore structures of the rotation member 110 may be simplified. Of course, the fixation section 131 of the cable 130 may also be fixed to an outer side of the second groove 170.

The manner of fixing the fixation section 131 in the second groove 170 is not limited. For example, a periphery of the rotation member 110 is also provided with at least one first opening 250 in communication with the second groove 170, and the fixation section 131 is fixed in the second groove 170 through the first opening 250.

The number of the first opening 250 is not limited. For example, there is one first opening 250. In this case, the fixation section 131 may be fixed in the second groove 170 by adhesion, snap-fitting or other manners, and the two the winding sections 132 are wound in the circumferential direction of the rotation member 110 from the position of the one first opening 250 and are located outside the second groove 170. For another example, as shown in FIG. 11 and FIG. 17, there are two first openings 250. In this case, the fixation section 131 is snapped in the second groove 170 through the two first openings 250, and each of the two winding section 132 is wound in the circumferential direction of the rotation member 110 from the position of a respective one of the two first openings 250, and is located outside the second groove 170.

In the example, as shown in FIG. 11 and FIG. 17, the rotation member 110 may further comprise a partition wall 240 arranged in the second groove 170, and there are two first openings 250 located at two ends of the partition wall 240. The partition wall 240 divides the second groove 170 into a first space 171 and a second space 172, and the fixation section 131 is fixed in the first space 171 through the two first openings 250. At least a part of the second elastic member 510 is arranged in the second space 172, so as to separate the fixation section 131 from the second elastic member 510 by the partition wall 240, to prevent the fixation section 131 and the second elastic member 510 from affecting each other. For example, if the fixation section is not separated from the second elastic member, the fixation section 131 will affect deformation and movement of the second elastic member 510, and the deformation and movement of the second elastic member 510 will cause the wear of the fixation section 131.

As an example, as shown in FIG. 11 and FIG. 17, the periphery of the rotation member 110 is also provided with a second opening 260 in communication with the second space 172. the first end of the second elastic member 510 is fixed to the housing 200 in the second space 172, and the second end of the second elastic member 510 passes through the second opening 260 and is fixed to a wall of the rotation member 110 located at a periphery of the second groove 170 by snap-fitting.

Here, the first end of the second elastic member 510 may be fixed to the third connection component 206 in the second space 172 by snap-fitting.

A tail portion of the second end of the second elastic member 510 may be located outside the second space 172 or may be located in the second space 172. For example, as shown in FIG. 17, the tail portion of the second end of the second elastic member 510 is located in the second space 172 through a first opening 250, to secure the second end of the second elastic member 510 by a wall between the first opening 250 and the second opening 260.

In the example, at a bottom wall of the second groove 170, the rotation member 110 is also provided with a connection through hole 270 arranged in an axial direction. The housing 200 is also provided with a third connection component 206 inserted into the connection through hole 270, and the first end of the second elastic member 510 is fixed to the third connection component 206.

The above descriptions are merely specific implementations of the application, however, the scope of protection of the application is not limited thereto, and variation or replacement easily conceived by any technician familiar with this technical field within the technical scope disclosed in the application, should fall within the scope of protection of the application. Therefore, the scope of protection of the application should be subject to the scope of protection of the claims.

## Claims

1. A cable receiving device, comprising:
a rotation member; and
a cable, comprising a fixation section and winding sections, wherein the fixation section is fixed to the rotation member, the winding sections being configured to be wound on an outside of the fixation section.

2. The cable receiving device of claim 1, wherein the rotation member comprises a first seat and a first connection component, the first seat being provided with a receiving space, the first connection component being arranged in the receiving space along an axial direction of the rotation member,
the cable receiving device further comprises:
a first strip-shaped member, arranged in the receiving space along the axial direction of the rotation member, wherein a first gap is defined between the first strip-shaped member and the first connection component,
wherein a first part of the fixation section is snapped in the first gap, a second part of the fixation section being arranged around a periphery of the first strip-shaped member.

3. The cable receiving device of claim 2, further comprises:
a second strip-shaped member, arranged in the receiving space along the axial direction of the rotation member, a second gap being defined between the second strip-shaped member and the first connection component,
wherein the fixation section further comprises: a third part located at an end of the first part opposite to the second part, and snapped in the second gap,
parts of the fixation section located at two ends of the third part are arranged around a periphery of the first connection component.

4. The cable receiving device of claim 3, wherein the second strip-shaped member and the first strip-shaped member are arranged at an interval in a circumferential direction of the first connection component.

5. The cable receiving device of claim 4, wherein the second strip-shaped member and the first strip-shaped member are located at opposite sides of the first connection component.

6. The cable receiving device of claim 3, wherein a surface of the second strip-shaped member facing a side of the first connection component is an arc surface.

7. The cable receiving device of claim 3, wherein the first strip-shaped member is a columnar structure, and/or the second strip-shaped member is a columnar structure.

8. The cable receiving device of claim 3, wherein in a radial direction, a size of the first connection component in a first width direction is relatively large, and a size of the first connection component in a second width direction is relatively small,
the first strip-shaped member and the second strip-shaped member are located at opposite sides of the first connection component in the second width direction.

9. The cable receiving device of claim 8, wherein an outer surface of the first connection component in the first width direction is a flat surface, and an outer surface of the first connection component in the second width direction is an arc surface.

10. The cable receiving device of claim 2, wherein the first seat is provided with a first plate and a second plate arranged at an interval in the axial direction of the rotation member, the receiving space being defined between the first plate and the second plate,
the first connection component is connected to the first plate and the second plate, the first strip-shaped member being connected to the first plate and the second plate.

11. The cable receiving device of claim 2, wherein a surface of the first strip-shaped member surrounded by the fixation section is an arc surface.

12. The cable receiving device of any one of claims 1 to 11, wherein the winding sections are located at two ends of the fixation section, and configured to be wound on the outside of the fixation section along a circumferential direction of the fixation section.

13. A data cable device, comprising a housing and the cable receiving device of any one of claims 2 to 12,
wherein the housing is provided with an accommodation cavity and a second connection component located in the accommodation cavity,
the rotation member is arranged in the accommodation cavity, the second connection component being rotatably connected to the first connection component.

14. The data cable device of claim 13, wherein the first connection component is provided with a through hole arranged along an axial direction of the rotation member, the second connection component being inserted into the through hole.

15. An ultrathin telescopic data cable device, comprising a housing and the cable receiving device of claim 1,
wherein the housing is provided with an accommodation cavity,
the rotation member is rotatably arranged in the accommodation cavity,
the winding sections are configured to be wound in a circumferential direction of the rotation member, wound parts of the winding sections being located in a space defined by the housing.

16. The ultrathin telescopic data cable device of claim 15, further comprising:
a second elastic member arranged on the rotation member, at least a part of a projection of the second elastic member on a projection plane parallel to an axis of the rotation member being located within a projection area of the fixation section on the projection plane,
the second elastic member is connected to the housing, to provide a restoring force for the rotation of the rotation member.

17. The ultrathin telescopic data cable device of claim 16, wherein all the projection of the second elastic member is located within the projection area of the fixation section.

18. The ultrathin telescopic data cable device of claim 15, wherein in a thickness direction of the ultrathin telescopic data cable device, a first gap is present between the cable and a first wall of the housing, and/or a second gap is present between the cable and a second wall of the housing.

19. The ultrathin telescopic data cable device of claim 15, wherein the housing is provided with a first wall and a second wall opposite to one another in a thickness direction of the ultrathin telescopic data cable device,
the wound parts of the winding sections are located in a space defined by the first wall and the second wall.

20. The ultrathin telescopic data cable device of claim 15, wherein the housing is provided with a first wall and a second wall opposite to one another in a thickness direction of the ultrathin telescopic data cable device,
the rotation member comprises:
a winding component, a first end of the winding component located at a side of first wall, the fixation section being fixed to the winding component, the winding sections being configured to be wound in a circumferential direction of the winding component,
a projection of the winding sections on a projection plane perpendicular to an axis of the rotation member is located outside a projection area of the winding component on the projection plane perpendicular to an axis of the rotation member.

21. The ultrathin telescopic data cable device of claim 20, wherein a second end of the winding component is located at a side of the second wall,
the rotation member further comprises:
a positioning component, arranged at the second end of the winding component, and protruded from a periphery of the winding component along the circumferential direction of the winding component,
a part of the wound part of each winding section is abutted against the positioning component, a part of the projection of the winding sections on the projection plane perpendicular to the axis of the rotation member being located outside a projection area of the positioning component.

22. The ultrathin telescopic data cable device of claim 21, wherein a height of the positioning component protruded from the winding component is less than a thickness of each winding section.

23. The ultrathin telescopic data cable device of claim 16, wherein the rotation member is provided with a second groove, an opening of the second groove being located at a first end of the rotation member,
at least a part of the second elastic member is arranged in the second groove, a first end of the second elastic member being fixed to the housing, and a second end of the second elastic member being fixed to the rotation member.

24. The ultrathin telescopic data cable device of claim 23, wherein a periphery of the rotation member is provided with at least one first opening in communication with the second groove, the fixation section being fixed in the second groove through the first opening.

25. The ultrathin telescopic data cable device of claim 24, wherein the rotation member further comprises a partition wall arranged in the second groove, wherein there are two first openings, and the two first openings are located at two ends of the partition wall,
the partition wall divides the second groove into a first space and a second space, the fixation section being fixed in the first space through the two first openings,
at least a part of the second elastic member is arranged in the second space.

26. The ultrathin telescopic data cable device of claim 25, wherein the periphery of the rotation member is provided with a second opening in communication with the second space, the first end of the second elastic member being fixed to the housing in the second space, the second end of the second elastic member passing through the second opening and being fixed to a wall of the rotation member located at a periphery of the second groove by snap-fitting.

27. The ultrathin telescopic data cable device of claim 26, wherein at a bottom wall of the second groove, the rotation member is provided with a connection through hole arranged along an axial direction,
the housing is provided with a third connection component inserted into the connection through hole, the first end of the second elastic member being fixed to the third connection component.

28. The ultrathin telescopic data cable device of claim 16, wherein a second end of the rotation member is provided with an inner chute and an outer chute which are annular and arranged at an interval, and an inlet and an outlet in communication with the inner chute and the outer chute respectively, the winding component being provided with a clamping groove at the outlet,
the ultrathin telescopic data cable device further comprises:
a positioning member, comprising a second seat rotatably arranged on the housing and a positioning protrusion protruded from an end surface of the second seat, the positioning protrusion being configured to be engaged in the clamping groove, to limit a rotation position of the rotation member relative to the housing.

29. The ultrathin telescopic data cable device of claim 28, wherein the rotation member is provided with a first guide protuberance at an inner sidewall of the inner chute, the first guide protuberance being located at the outlet, to guide the positioning protrusion to slide into the clamping groove from the outlet,
the rotation member is provided with a second guide protuberance at an outer sidewall of the outer chute, the second guide protuberance being located at the inlet, to guide the positioning protrusion to slide into the inner chute from the inlet.

30. The ultrathin telescopic data cable device of claim 28, wherein the second seat is an annular structure, the housing further comprising a second protruded column inserted into an inner cavity of the second seat.

31. The ultrathin telescopic data cable device of claim 15, wherein the housing is provided with a first hole and a second hole in communication with the accommodation cavity,
there are two said winding sections, the two winding sections being located at two ends of the fixation section,
the cable further comprises:
a first interface member connected to one of the two winding sections, at least a part of the first interface member passing through the first hole and being located outside the housing, and
a second interface member connected to another one of the two winding sections, at least a part of the second interface member passing through the second hole and being located outside the housing.

32. The ultrathin telescopic data cable device of any one of claims 15 to 31, wherein at least a part of a projection of the winding sections on a projection plane perpendicular to an axis of the rotation member is located outside a projection area of the rotation member on the projection plane perpendicular to the axis of the rotation member.

33. The ultrathin telescopic data cable device of any one of claims 15 to 31, wherein in a thickness direction of the ultrathin telescopic data cable device, there is a gap between the cable and a first wall of the housing and there is a gap between the cable and a second wall of the housing, a minimum thickness of the ultrathin telescopic data cable device being equal to a sum of width of the cable, a thickness of the first wall, a thickness of the second wall and the gaps.
